# EUROPÄISCHE PATENTSCHRIFT

(11) **EP 2 314 901 B1**
(45) Veröffentlichungstag und Bekanntmachung des Hinweises auf die Patenterteilung: **28.06.2017**
(21) Anmeldenummer: 10013868.4
(22) Anmeldetag: 21.10.2010
(51) Int. Cl.: F16K 27/00, F16K 27/02

(54) **Ventilgehäuserohling sowie Ventilbausatz**
Valve housing blank and valve component set
Ebauche de boîtier de soupape et ensemble de soupape

(30) Priorität: 21.10.2009 DE 202009014234 U
(43) Veröffentlichungstag der Anmeldung: 27.04.2011
(73) Patentinhaber: Bürkert Werke GmbH, 74653 Ingelfingen (DE)
(72) Erfinder: Renninger, Jürgen, 74243 Langenbrettach (DE)
(74) Vertreter: Prinz & Partner mbB

(56) Entgegenhaltungen:
- DE-A1- 3 422 336
- DE-U1-202008 004 672
- US-A- 3 572 368
- US-A- 6 123 094

## Beschreibung

Die Erfindung betrifft einen Ventilgehäuserohling gemäß dem Oberbegriff des Anspruches 1, wie er beispielsweise aus Figur 1 der US-A-6 123 094 bekannt ist und einen Ventilbausatz aus den erfindungsgemäßen Ventilgehäuserohlingen.

Aus der DE 20 2008 004 672 ist bereits ein Ventilgehäuserohling bekannt, der kostengünstig als Gussteil hergestellt wird und eine hohe Flexibilität beim Zusammenstellen eines Ventilbausatzes ermöglicht, da er mit sehr wenig Aufwand nachbearbeitet werden kann und dann zu vielfältigen Ventilbausätzen zusammensetzbar ist. Bei diesem Ventilgehäuserohling werden zwei parallele Aufnahmeräume für zwei Ventileinsätze mit insgesamt zehn zu- oder abgehenden Leitungen gekoppelt, welche aber im Ausgangszustand überwiegend durch dünne Zwischenwände zum Aufnahmeraum hin verschlossen sind. Je nach Leitungsführung innerhalb des aus mehreren Ventilgehäusen zusammengesetzten Ventilbausatzes werden verschiedene Zwischenwände entfernt.

Gegenüber diesen bekannten Ventilgehäuserohlingen sollen die Kompatibilität und der Raumbedarf noch einmal verringert werden, sodass noch kompaktere und flexiblere Ventilbausätze aus diesen neuen Ventilgehäuserohlingen zusammensetzbar sind.

Der erfindungsgemäße Ventilgehäuserohling weist die Merkmale des Anspruches 1 auf. Unter "Doppelpaar" sollen im Folgenden zwei Paare von Zuführkanälen verstanden werden, wobei jedes Paar bezüglich der Längsachse einander gegenüberliegende Zuführkanäle hat und die beiden Paare in Längsrichtung gesehen versetzt zueinander liegen. Die zuvor erwähnten ersten Paare bilden ebenfalls ein Doppelpaar.

Im Gegensatz zum Stand der Technik ist beim erfindungsgemäßen Gehäuserohling eine Vielzahl von Zuführkanälen zum Aufnahmeraum vorgesehen. Hier sind nämlich wenigstens zwei Doppelpaare und somit vier Paare von Zuführkanälen vorgesehen. Der Ventilgehäuserohling kann insbesondere als Feingussteil ausgebildet sein, zum Beispiel als Edelstahlfeinguss.

Vorzugsweise ist auch nur ein singulärer, das heißt einziger Aufnahmeraum vorgesehen, sodass der Ventilgehäuserohling eine noch kleinere Einheit darstellt als der bekannte Ventilgehäuserohling. Dennoch sind sämtliche zusammenstellbaren Konstellationen zur Bildung flexibler Ventilbausätze vorhanden.

Um die Kompaktheit in Axialrichtung zu steigern, sollten die beiden ersten Paare von Zuführkanälen bezüglich ihrer Achsen in einer gemeinsamen Ebene liegen. Vorzugsweise liegt diese Ebene auch senkrecht zur Längsachse des Aufnahmeraums. Es gehen also vorzugsweise vier Zuführkanäle zum Aufnahmeraum, und zwar vier Zuführkanäle, die in einer Ebene liegen. Bezüglich des Begriffs "Zuführkanäle" ist zu betonen, dass dieser Begriff nicht auf den späteren Einsatz der Kanäle als Zulauf beschränkt ist, sondern natürlich auch Kanäle umfassen soll, die im späteren Gebrauch als Fluidablaufkanäle dienen.

Auch die anderen Doppelpaare von Zuführkanälen sollten bezüglich ihrer jeweiligen Achse in einer gemeinsamen Ebene liegen. Auch diese Ebene kann vorzugsweise senkrecht zur Längsachse verlaufen, sodass jedes Doppelpaar sozusagen eine Ebene bildet und die Ebenen axial voneinander beabstandet (axial in Bezug auf die Längsachse) und parallel zueinander verlaufen.

Darüber hinaus sollten die Zuführkanäle der verschiedenen Ebenen in Richtung der Längsachse in Gruppen hintereinander liegen, das heißt nicht umfangsmäßig versetzt zueinander sein. Das bedeutet, die Ausrichtung der Zuführkanäle in Umfangsrichtung ist bei den Zuführkanälen der verschiedenen Ebenen gleich. Dies erhöht die Variabilität der Ventilgehäuserohlinge.

Zur Erhöhung der Variabilität ist auch vorgesehen, dass der offene Zuführkanal der ersten Paare (des ersten Doppelpaars) bezüglich der Längsachse auf der diametral gegenüberliegenden Seite, jedoch axial versetzt zum offenen Zuführkanal des zweiten Doppelpaares liegt.

Gemäß der bevorzugten Ausführungsform ist der Ventilgehäuserohling ein reines Gussteil, insbesondere Metall- oder Kunststoffspritzgussteil, wobei aber auch ein Sinterteil möglich wäre.

Um die Wandstärken im Ventilgehäuserohling so gering und vor allem gleichmäßig wie möglich zu haben, sieht eine Ausführungsform vor, dass die Zuführkanäle als rohrförmige Fortsätze ausgebildet sind. Der Ventilgehäuserohling ist kein blockartiges Teil, sondern ein filigranes, leicht bauendes Teil, das sozusagen nur aus dünnen Kanalwänden zusammengesetzt ist.

Für eine erhöhte Stabilität sorgen eine oder mehrere Rippen, die axial übereinanderliegende Fortsätze miteinander verbinden und die vorzugsweise einstückig in die Fortsätze übergehen.

Diese Rippen können radial zur Längsachse verlaufen.

Ausnehmungen, vorzugsweise in Form von Löchern, in den Rippen stellen Befestigungsausnehmungen dar, über die mehrere Gehäuserohlinge miteinander verklemmt bzw. verschraubt werden können.

Diese Befestigungsausnehmungen sind nicht etwa durch spanende Bearbeitung, sondern beim Gießen des Rohlings ausgenommen.

In Richtung der Längsachse betrachtet sollen die zugeordneten Paare von Zuführkanälen senkrecht zueinander liegen. Das bedeutet, die ohnehin miteinander fluchtenden Achsen der zwei jeweils ein Paar bildenden, gegenüberliegenden Zuführkanäle schneiden die Achsen des anderen Paares unter 90° und, zusätzlich, in der Längsachse.

Da der erfindungsgemäße Ventilgehäuserohling nicht als Block, sondern als filigranes Teil mit dünnen Kanalwänden ausgeführt ist, bestünde beim Aneinandersetzen und Befestigen von mehreren Ventilgehäusen die Gefahr, dass diese nicht stabil aneinandergeklemmt werden können. Um diese Stabilität zu verbessern ist vorgesehen, dass seitlich der Zuführkanäle seitlich nach außen abstehende Abstandhalter an den Rohlingen angeformt sind.

Diese Abstandhalter sollten vorzugsweise bis zu den radial äußeren Enden der Zuführkanäle verlaufen. Das bedeutet, die Abstandhalter wirken zusammen mit den Zuführkanälen als Abstützfläche, wenn mehrere Ventilgehäuse aneinandergesetzt werden.

Diese Wirkung kann noch verbessert werden, wenn die Zuführkanäle nach außen in einer planen Stirnfläche enden und die Abstandhalter in der Ebene der Stirnflächen enden, um eine Kontaktfläche zu bilden.

Ferner kann sich ein, vorzugsweise jeder Abstandhalter, bis in die zwei Ebenen von planen Stirnflächen benachbarter Zuführkanäle (das heißt in Umfangsrichtung unmittelbar benachbarter Zuführkanäle) erstrecken und dort unter Bildung einer Kontaktfläche enden. Dies bedeutet, dass ein solcher Abstandhalter sozusagen in zwei Richtungen wirkt, da er zwei Kontaktflächen, die verschieden ausgerichtet sind, besitzt.

Die Stirnflächen der Zuführkanäle und/oder die Kontaktflächen sollten in Längsrichtung gesehen auf den Seiten eines Quadrats liegen, sodass der Ventilgehäuserohling in Längsrichtung betrachtet eine Umhüllende in Form eines Quadrates hat. Dies erleichtert die Zusammensetzung mehrerer Ventilgehäuse zu einem Ventilbausatz.

Die Abstandhalter sind insbesondere als radiale Rippen ausgebildet.

Dabei ist die Rippendicke bevorzugt nicht größer als die Dicke der die Zuführkanäle bildenden Kanalwände, sodass keine Materialanhäufung stattfindet und das Spritzgießen oder Gießen durch erhöhte Materialanhäufungen nicht erschwert wird.

Insbesondere haben die ersten Paare von Zuführkanälen und/oder das wenigstens andere Doppelpaar eigene Abstandhalter, die vorzugsweise jeweils in der durch die Achsen der zugeordneten Zuführkanäle aufgespannten Ebene ihres Doppelpaares liegen.

Der wenigstens eine offene Zuführkanal kann an seinem äußeren Ende mit einer Querschnittserweiterung enden, sodass hier unter Umständen eine Dichtung, insbesondere aus Grafit oder dergleichen eingesetzt werden kann.

Der Aufnahmeraum endet gemäß einer Ausführungsform an einer Stirnwand, die eine zerstörbare Zwischenwand ist, auf deren gegenüberliegender Seite ein axialer Zuführkanal endet. Somit gibt es auch einen Zuführkanal in Richtung der Längsachse.

Der Aufnahmeraum kann nach außen in einer planen Flanschfläche enden, und auch an der entgegengesetzten Seite des Rohlings kann eine hierzu parallele Flanschfläche vorhanden sein. Die Flanschflächen, die Stirnflächen und die Kontaktflächen liegen auf/in den Flächen eines Würfels oder Quaders, insbesondere eines Quaders mit quadratischer Grundfläche. Der Rohling wird zusammen mit anderen Rohlingen somit sehr leicht zu einem Ventilbausatz mit mehreren Ventileinsätzen zusammensetzbar, und dies bei einer hohen Kompaktheit und vor allem Flexibilität.

Die Zwischenwand grenzt gemäß der bevorzugten Ausführungsform im Übrigen unmittelbar an den Aufnahmeraum an.

Beim Rohling wird in zumindest einem Kanal ein Ventilsitz mit gegossen, der nicht nachbearbeitet wird.

Die Erfindung betrifft darüber hinaus auch einen Ventilbausatz mit mehreren aneinandergrenzenden Ventilgehäusen aus erfindungsgemäßen Ventilrohlingen, wobei mehrere Zwischenwände zumindest teilweise entfernt sind, um durchgehende Kanäle zu bilden und mehrere Zuführkanäle miteinander in Strömungsverbindung zu bringen.

Alternativ zu den zuvor beschriebenen Ausführungsformen können die einzelnen Ventilgehäuse natürlich auch schräg einwärts verlaufende Aufnahmeräume besitzen oder schräg zueinander verlaufende Zuführkanäle, beispielsweise könnten in einer Ebene auch sechs oder acht Zuführkänäle auf den Aufnahmeraum zulaufen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine perspektivische Ansicht einer ersten Ausführungsform eines erfindungsgemäßen Ventilgehäuserohlings,
- Figur 2 eine Längsschnittansicht durch den Ventilgehäuserohling nach Figur 1, und
- Figur 3 einen Ventilbausatz mit mehreren miteinander gekoppelten Ventilgehäusen, die aus erfindungsgemäßen Ventilgehäuserohlingen gebildet werden, zum Teil in Explosions- und Schnittansicht.

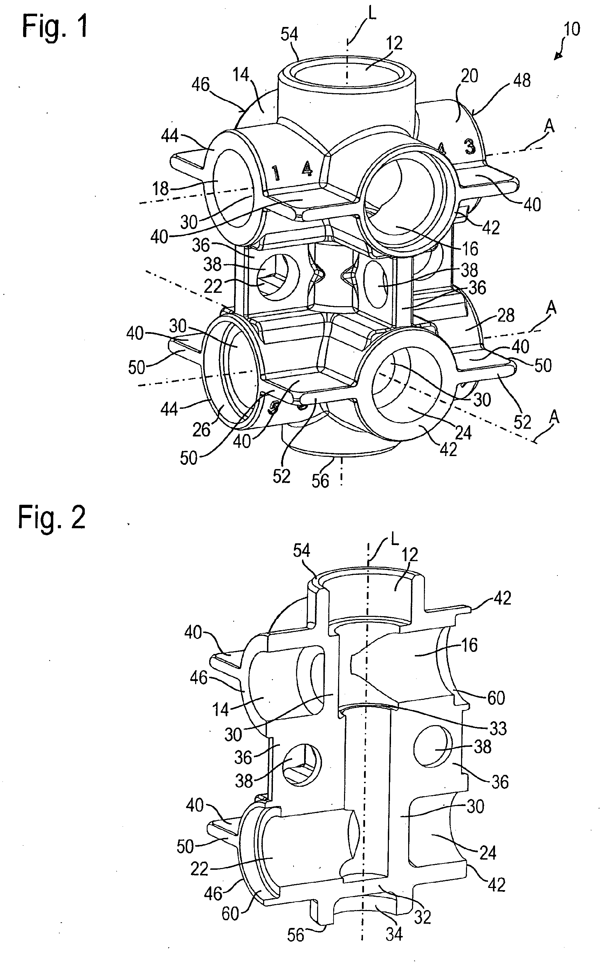

In Figur 1 ist ein Ventilgehäuserohling 10 gezeigt, der einstückig aus Kunststoff oder Metall, insbesondere Aluminium oder Edelstahl, gegossen wird, besonders durch Feinguss. Der Ventilgehäuserohling 10, so wie er dargestellt ist, ist nicht spanend nachbearbeitet.

Der Rohling 10 besitzt einen, auch in Figur 2 gut zu erkennenden Aufnahmeraum 12, der mit zunehmender Tiefe mehrere Absätze aufweist und vom Querschnitt her immer enger wird. Der Aufnahmeraum 12 hat eine Längsachse L.

Zu dem Aufnahmeraum 12 führen seitlich, hier radial zur Längsachse L zahlreiche Zuführkanäle 14, die durch dünne Wände gebildet sind, die eine rohrförmige Gestalt haben.

Ein oberes Doppelpaar von Zuführkanälen 14 bis 20 und ein axial versetzt hierzu angeordnetes unteres Doppelpaar von Zuführkanälen 22 bis 28 verlaufen im gezeigten Ausführungsbeispiel mit ihren Achsen A allesamt auf die Längsachse L zu.

Das obere Doppelpaar von Zuführkanälen 14 bis 20, auch erste Paare von Zuführkanälen 14 bis 20 genannt, besitzt ein erstes Paar bezüglich der Längsachse diametral gegenüberliegender Zuführkanäle 14, 16 und ein zweites Paar, ebenfalls bezüglich der Längsachse diametral gegenüberliegender Zuführkanäle 18, 20. Die Achsen A beider Paare verlaufen rechtwinkelig zur Längsachse L und spannen eine Ebene auf, die ebenfalls rechtwinkelig zur Längsachse L liegt.

Das untere Doppelpaar besitzt Zuführkanälen 22 bis 28, die ebenso ausgerichtet sind wie die des oberen Doppelpaares, das heißt, sich ebenso weit radial nach außen erstrecken, in Richtung der Längsachse L gesehen unter den entsprechenden Zuführkanälen 14 bis 20 liegen, das heißt ohne Winkelversatz zu diesen angeordnet sind und die ebenfalls mit ihren Achsen A eine Ebene aufspannen, die rechtwinkelig zur Längsachse L und damit parallel zur oberen Ebene liegt.

Pro Doppelpaar von Zuführkanälen ist, wie in Figur 2 erkennbar wird, nur ein Zuführkanal 16 bzw. 22 zum Aufnahmeraum 12 hin offen. Alle übrigen Zuführkanäle sind durch eine dünne Zwischenwand 30, welche vorzugsweise unmittelbar an den Aufnahmeraum 12 anschließt, von diesem getrennt.

Je nach Strömungsführung im späteren Ventilgehäuse müssen zur Fertigstellung des Ventilgehäuses aus den dargestellten Rohlingen ausschließlich die Zwischenwände 30 entfernt werden, die für die Fluidführung notwendig sind. Alle übrigen Zwischenwände bleiben stehen.

Beim Gießen des Ventilgehäuserohlings 10 wird zugleich zumindest an einem Zuführkanal (hier am Kanal 12) ein Ventilsitz 33 mit angegossen. Der Ventilsitz 33 ist ein ringförmiger Absatz, der insbesondere mit einem axial nach außen verlaufenden Wulst ausgeführt ist. Der Wulst soll die Dichtigkeit verbessern. Der Ventilsitz 33 wird nicht nachbearbeitet.

Die spanende Bearbeitung des Rohlings zur Bildung des späteren Ventilgehäuses ist dadurch minimiert.

In axialer Richtung ist der Aufnahmeraum 12 durch eine Zwischenwand 32 von einem kurzen, axialen Zuführkanal 34 getrennt, der koaxial zum Aufnahmeraum 12 verläuft.

Zur Erhöhung der Stabilität und zur Befestigung von Ventilgehäusen aneinander, um einen Ventilbausatz zu bilden, sind insbesondere radial verlaufende, einstückig angeformte Rippen 36 vorgesehen, die die als rohrförmige Fortsätze ausgebildeten, axial übereinanderliegenden Wände der Zuführkanäle 14 bis 28 miteinander verbinden.

Die Rippen 36 haben eine Wanddicke, die maximal der Dicke der Wand der Zuführkanäle 14 bis 28 entspricht.

Die Rippen 36 verlaufen, wie in Figur 1 gut zu sehen ist, in zwei rechtwinkelig zueinander stehenden Ebenen und in Ebenen, die durch exakt axial übereinanderliegende Achsen A definiert sind.

Die Rippen 36 haben Befestigungsausnehmungen 38 in Form von Löchern. Diese Löcher sind insbesondere beim Gießen bereits ausgenommen, das heißt, dass keine spanende Bearbeitung zu ihrer Herstellung erforderlich ist.

An den Ventilgehäuserohling 10 sind darüber hinaus auch Abstandhalter 40 einstückig angeformt.

Diese Abstandhalter 40 sind im bevorzugten Ausführungsbeispiel, das jedoch nicht einschränkend zu verstehen sein soll, dünne Rippen, welche eine Wanddicke haben, die dünner als die der Wände der Zuführkanäle 14 bis 28 ist.

Ferner sind die Abstandhalter 40 vorzugsweise in der Ebene eines Doppelpaares von Zuführkanälen 14 bis 20 oder 22 bis 28 liegend angeordnet.

Die Abstandhalter 40 stehen seitlich bezüglich der Längsachse L nach außen vor und erstrecken sich gemäß der dargestellten, bevorzugten Ausführungsform bis zu den radial äußeren Enden der Zuführkanäle 14 bis 28, das heißt, bis zur entsprechenden Rohrwand, wie es im Folgenden noch detaillierter erläutert wird.

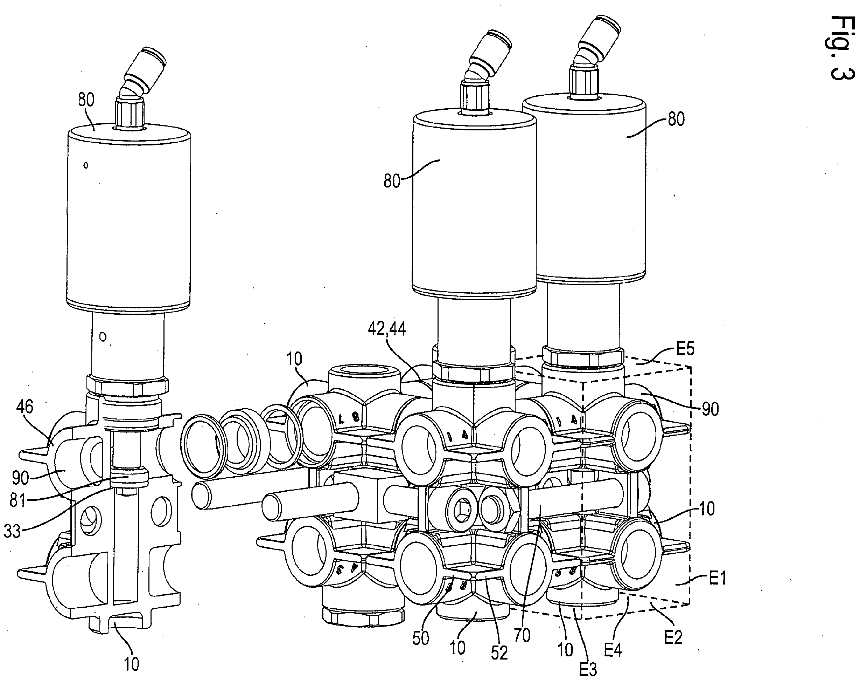

Die Rohrwände der Zuführkanäle 14 bis 28 enden jeweils insbesondere in einer planen Stirnfläche 42 bis 48. Diese Stirnflächen 42 bis 48 bilden für paarweise axial übereinander angeordnete Zuführkanäle 14 bis 28 insgesamt vier Ebenen, E1 bis E4 (siehe Fig. 3), die paarweise parallele Ebenen bilden, wobei die Ebenen E1, E2 eines Paares senkrecht zu den Ebenen E3, E4 des anderen steht.

Die Abstandhalter 40 erstrecken sich bis zu diesen, durch die Stirnflächen 40 bis 48 definierten Ebenen E1 bis E4, wobei vorzugsweise jeder Abstandhalter 40 bis in zwei senkrecht aufeinandertreffende Ebenen E1 bis E4 verläuft und sozusagen als Eckrippe ausgeführt ist.

Die Abstandhalter 40 haben plane Kontaktflächen 50, 52, welche in den zuvor erwähnten, durch die Stirnflächen 42 bis 48 definierten Ebenen E1 bis E4 enden.

Wie in Figur 1 zu erkennen ist, hat jedes Doppelpaar von Zuführkanälen 14 bis 20 und 22 bis 28 jeweils eigene Abstandhalter 40, für die dargestellte Ausführung vier Abstandhalter 40, die zugleich als Verbindungsrippen zwischen benachbarten Wänden von Zuführkanälen 14 bis 28 dienen.

In Draufsicht betrachtet, das heißt in Richtung der Längsachse L, liegen sämtliche Stirnflächen 42 bis 48 sowie die Kontaktflächen 50, 52 auf den Seitenflächen eines Quadrats (siehe Fig. 3).

Mit den planen, senkrecht zur Längsachse L verlaufenden Flanschflächen 54, 56 ergibt sich insgesamt mit den Stirnflächen 42 bis 48 und den Kontaktflächen 50, 52 eine quaderförmige Umhüllende, insbesondere mit einer quadratischen Grundfläche (siehe Fig. 3).

Als alternative Ausführungsform zu der dargestellten Ausführungsform können auch Ventilgehäuserohlinge vorgesehen sein, die in axialer Richtung, bezogen auf Figur 1, sozusagen halbiert sind und nur ein Doppelpaar von Zuführkanälen besitzen.

In Figur 2 ist auch zu erkennen, dass die beiden Zuführkanäle 16, 22 in den beiden übereinanderliegenden Ebenen, die von Haus aus zum Aufnahmeraum 12 offen sind, in Längsrichtung betrachtet auf diagonal gegenüberliegenden Seiten der Längsachse L und sozusagen nur axial versetzt zueinander liegen. Diese Zuführkanäle 16, 22 enden radial nach außen mit einer bereits beim Spritzen ausgeformten Querschnittserweiterung 60, die stufenförmig ausgebildet ist. In dieser Erweiterung 60 lässt sich beispielsweise eine Dichtung oder ein Verbindungsrohr aufnehmen.

Figur 3 zeigt, dass mehrere Ventilgehäuse, die aus den Ventilgehäuserohlingen 10 nach den Figuren 1 und 2 hergestellt sind, sehr einfach und baukastenartig zu einem beliebigen Ventilbausatz (auch Ventilblock genannt) zusammensetzbar sind. Die Verbindung erfolgt vorzugsweise über Klemmelemente, hier insbesondere Gewindestangen 70, die sich durch die Ausnehmungen 38 in den Rippen 36 erstrecken und benachbarte Ventilgehäuse aneinander befestigen.

Damit entsprechende Leitungsführungen zustande kommen, sind einzelne Zwischenwände 30 oder 32 entfernt.

In Figur 3 ist auch zu erkennen, dass in einigen Aufnahmeräumen 12 zum Beispiel pneumatisch betätigbare Aktuatoren mit entsprechenden Ventileinsätzen 80 sitzen, die in Aufnahmeräume 12 ragen und die nach Betätigung gegenüberliegende oder versetzte Zuführkanäle 14 bis 28 miteinander strömungsverbinden oder trennen, um unterschiedliche Strömungsverläufe zu ermöglichen. Die Ventilkörper 81 können zum Schließen eines Kanals gegen einen Ventilsitz gedrückt werden.

In Figur 3 ist zu sehen, dass nicht jedes Ventilgehäuse zur Aufnahme eines Ventileinsatzes 80 vorgesehen ist, sondern dass es Ventilgehäuse gibt, die lediglich als Leitungsführung dienen. Eventuell kann hier auch ein Aufnahmeraum 12 im Bereich seines freien Endes durch einen Stopfen verschlossen werden, falls dies erforderlich ist.

Aufgrund der quaderförmigen Gestalt lassen sich beliebige Ventilbausätze zusammenstellen, die auch beliebig komplex sein können. Der Grundaufbau bleibt aber derselbe. Das heißt, dass man sozusagen mit einer Art von Ventilgehäuserohlingen extrem komplexe Ventilbausätze zusammenstellen kann und dabei auch sehr wenig spanende Bearbeitung aufbringen muss.

Um die verschiedenen Zuführkanäle 14 bis 28 erkennbar zu machen, hat jeder Zuführkanal 14 bis 28 eine individuelle Form oder Aufschrift, hier in Form von Zahlen 90. Neben Aktuatoren können natürlich auch andere Ventileinsätze 80 in die Ventilgehäuse eingebaut werden, zum Beispiel Rückschlagventile, Filter oder Drosseln.

Wie in Figur 3 zu sehen ist, liegen die aneinandergrenzenden Ventilgehäuse an den Stirnflächen 42 bis 48 und zusätzlich an den Kontaktflächen 50, 52 an, sodass trotz der Klemmung durch die Befestigungsmittel, hier die Gewindestangen 70, keine Verkantung der einzelnen Ventilgehäuse möglich ist und diese sozusagen stabil und gegen Kippen gesichert aneinander anliegen.

## Patentansprüche

1. Ventilgehäuserohling, mit einem Aufnahmeraum (12) für einen Ventileinsatz (80), der eine Längsachse (L) aufweist, wobei wenigstens zwei sich bezüglich der Längsachse (L) gegenüberliegende erste Paare von Zuführkanälen (14 bis 20), die ein Doppelpaar von Zuführkanälen bilden, sich von der Außenseite des Rohlings seitlich, insbesondere radial, zu dem Aufnahmeraum (12) hin erstrecken, **dadurch gekennzeichnet, dass** zumindest ein weiteres Doppelpaar von Zuführkanälen (22 bis 28), die sich bezüglich der Längsachse (L) gegenüberliegen und sich von der Außenseite des Rohlings seitlich, insbesondere radial, zu dem Aufnahmeraum (12) hin erstrecken, vorgesehen ist, wobei die Doppelpaare von Zuführkanälen (14 bis 28) axial übereinander liegen, wobei die ersten Paare von Zuführkanälen (14 bis 20) und auch die Zuführkanäle (22 bis 28) des zumindest einen weiteren Doppelpaares von Zuführkanälen (22 bis 28) in Richtung der Längsachse (L) betrachtet versetzt zueinander liegen und wobei nur einer der Zuführkanäle (16, 22) pro Doppelpaar zum Aufnahmeraum (12) offen ist und die anderen Zuführkanäle (14, 18, 20, 24, 26, 28) durch eine zerstörbare Zwischenwand (30) zum Aufnahmeraum (12) geschlossen sind.

2. Ventilgehäuserohling nach Anspruch 1, **dadurch gekennzeichnet, dass** die beiden ersten Paare von Zuführkanälen (14 bis 20) bezüglich ihrer Achse (A) in einer Ebene liegen, die vorzugsweise rechtwinkelig zur Längsachse (L) liegt.

3. Ventilgehäuserohling nach einem der vorhergehenden Ansprüche, **dadurch gekennzeichnet, dass** auch das weitere Doppelpaar von Zuführkanälen (22 bis 28) bezüglich ihrer Achse (A) in einer Ebene liegt, die vorzugsweise rechtwinkelig zur Längsachse (L) liegt.

4. Ventilgehäuserohling nach einem der vorhergehenden Ansprüche, **dadurch gekennzeichnet, dass** die beiden ersten Paare von Zuführkanälen (14 bis 20) bzw. das wenigstens eine weitere Doppelpaar von Zuführkanälen (22 bis 28) axial übereinanderliegende Zuführkanäle (14 und 22, 18 und 26, 16 und 24, 20 und 28) haben.

5. Ventilgehäuserohling nach einem der vorhergehenden Ansprüche, **dadurch gekennzeichnet, dass** der offene Zuführkanal (16) der ersten Paare bezüglich der Längsachse (L) auf der diametral gegenüberliegenden Seite, jedoch axial versetzt zum offenen Zuführkanal (22) des weiteren Doppelpaares liegt.

6. Ventilgehäuserohling nach einem der vorhergehenden Ansprüche, **dadurch gekennzeichnet, dass** die Zuführkanäle (14 bis 28) als rohrförmige Fortsätze ausgebildet sind.

7. Ventilgehäuserohling nach Anspruch 6, **dadurch gekennzeichnet, dass** axial übereinanderliegende Fortsätze durch eine einstückig angeformte Rippe (36) miteinander verbunden sind, die vorzugsweise radial zur Längsachse (L) verlaufen,
wobei vorzugsweise eine Befestigungsausnehmung (38) in den Rippen (36) ausgebildet ist, insbesondere ausgegossen ist.

8. Ventilgehäuserohling nach einem der vorhergehenden Ansprüche, **dadurch gekennzeichnet, dass** die zugeordneten Paare von Zuführkanälen (14 und 16, 18 und 20, 22 und 24, 26 und 28) senkrecht zueinander liegen.

9. Ventilgehäuserohling nach einem der vorhergehenden Ansprüche, **dadurch gekennzeichnet, dass** seitlich der Zuführkanäle (14 bis 28) seitlich nach außen abstehende Abstandhalter (40) angeformt sind, die sich vorzugsweise bis zu den radial äußeren Enden der Zuführkanäle (14 bis 28) erstrecken,
wobei vorzugsweise die Zuführkanäle (14 bis 28) nach außen in einer planaren Stirnfläche (42 bis 48) enden und die Abstandhalter (40) in der Ebene der Stirnflächen (42 bis 48) enden, um dort eine Kontaktfläche (50, 52) zu bilden,
wobei vorzugsweise ein, vorzugsweise jeder Abstandhalter (40) sich bis in zwei durch Stirnflächen (42 bis 48) definierte Ebenen erstreckt und dort unter Bildung jeweils einer Kontaktfläche (50, 52) endet,
wobei vorzugsweise die Stirnflächen (42 bis 48) der Zuführkanäle (14 bis 28) und/oder die Kontaktflächen (50, 52) in Längsrichtung gesehen auf den Seiten eines Quadrats liegen,
wobei vorzugsweise die Abstandhalter (40) als radiale Rippen ausgebildet sind, die vorzugsweise in einer Ebene rechtwinkelig zur Längsachse (L) liegen,
wobei vorzugsweise die ersten Paare und/oder das wenigstens andere Doppelpaar eigene Abstandhalter (40) haben, die vorzugsweise in der durch die Achsen (A) der zugeordneten Zuführkanäle (14 bis 20 und 22 bis 28) aufgespannten Ebenen liegen, die vorzugsweise rechtwinkelig zur Längsachse (L) verlaufen.

10. Ventilgehäuserohling nach einem der vorhergehenden Ansprüche, **dadurch gekennzeichnet, dass** der wenigstens eine offene Zuführkanal (16, 22) an seinem äußeren Ende mit einer Querschnittserweiterung (60) endet.

11. Ventilgehäuserohling nach einem der vorhergehenden Ansprüche, **dadurch gekennzeichnet, dass** der Aufnahmeraum (12) in einer stirnseitigen Wand endet, die eine zerstörbare Zwischenwand (32) ist, auf deren gegenüberliegenden Seite ein axialer Zuführkanal (34) endet.

12. Ventilgehäuserohling nach einem der vorhergehenden Ansprüche, **dadurch gekennzeichnet, dass** der Aufnahmeraum (12) nach außen in einer planaren Flanschfläche (54) endet und an der entgegengesetzten Seite des Rohlings eine parallele Flanschfläche (56) liegt, wobei die Flanschflächen (54, 56), die Stirnflächen (42 bis 48) und die Kontaktflächen (50, 52) in den Flächen eines Würfels oder Quaders liegen, insbesondere eines Quaders quadratischer Grundfläche.

13. Ventilgehäuserohling nach einem der vorhergehenden Ansprüche, **dadurch gekennzeichnet, dass** die Zwischenwand (30, 32) direkt an den Aufnahmeraum (12) angrenzt.

14. Ventilgehäuserohling nach einem der vorhergehenden Ansprüche, **dadurch gekennzeichnet, dass** ein durch Gießen hergestellter Ventilsitz im Aufnahmeraum (12) ausgebildet ist.

15. Ventilbausatz mit mehreren aneinandergrenzenden Ventilgehäusen aus Ventilgehäuserohlingen nach einem der vorhergehenden Ansprüche, wobei mehrere Zwischenwände (30, 32) zumindest teilweise entfernt sind, um durchgehende Kanäle zu bilden und mehrere Zuführkanäle (14 bis 28) miteinander in Strömungsverbindung zu bringen.

## Claims

1. A valve housing blank comprising a receiving space (12) for a valve insert (80) which has a longitudinal axis (L), at least two first pairs of supply channels (14 to 20) which are opposed to each other with respect to the longitudinal axis (L) and form a double pair of supply channels extending from the outer surface of the blank laterally, preferably radially towards the receiving space (12), **characterized in that** at least one further double pair of supply channels (22 to 28) is provided which are opposed to each other with respect to the longitudinal axis (L) and extend from the outer surface of the blank laterally, preferably radially towards the receiving space (12), the double pairs of supply channels (14 to 28) being arranged axially one on top of the other, the first pairs of supply channels (14 to 20) and also the supply channels (22 to 28) of the at least one further double pair of supply channels (22 to 28) being offset with respect to each other as viewed in the direction of the longitudinal axis (L), and only one of the supply channels (16, 22) per double pair being open towards the receiving space (12), and the other supply channels (14, 18, 20, 24, 26, 28) being closed towards the receiving space (12) by a destructible partition wall (30).

2. The valve housing blank according to claim 1, **characterized in that** with respect to their axis (A), the two first pairs of supply channels (14 to 20) are arranged in a plane preferably running at right angles to the longitudinal axis (L).

3. The valve housing blank according to any of the preceding claims, **characterized in that** with respect to their axis (A), the further double pair of supply channels (22 to 28) is also arranged in a plane preferably running at right angles to the longitudinal axis (L).

4. The valve housing blank according to any of the preceding claims, **characterized in that** the two first pairs of supply channels (14 to 20) or the at least one further double pair of supply channels (22 to 28) include supply channels (14 and 22, 18 and 26, 16 and 24, 20 and 28) which are arranged axially one on top of each other.

5. The valve housing blank according to any of the preceding claims, **characterized in that** with respect to the longitudinal axis (L), the open supply channel (16) of the first pairs is arranged on the diametrically opposed side, but axially offset with respect to the open supply channel (22) of the further double pair.

6. The valve housing blank according to any of the preceding claims, **characterized in that** the supply channels (14 to 28) are configured as tubular prolongations.

7. The valve housing blank according to claim 6, **characterized in that** prolongations which are arranged axially one on top of each other are connected to each other by an integrally molded rib (36) preferably extending radially to the longitudinal axis (L),
a fastening recess (38) being preferably formed, in particular cast out in the ribs (36).

8. The valve housing blank according to any of the preceding claims, **characterized in that** the associated pairs of supply channels (14 and 16, 18 and 20, 22 and 24, 26 and 28) are arranged perpendicularly to each other.

9. The valve housing blank according to any of the preceding claims, **characterized in that** spacers (40) projecting laterally to the outside are molded laterally with the supply channels (14 to 28) and preferably run up to the radially outer ends of the supply channels (14 to 28),
the supply channels (14 to 28) preferably ending outwardly in a planar end face (42 to 48), and the spacers (40) ending in the plane of the end faces (42 to 48) to form a contact surface (50, 52) there,
preferably one, preferably each spacer (40) extending up to two planes defined by end faces (42 to 48) and ending there so that they each form a contact surface (50, 52),
the end faces (42 to 48) of the supply channels (14 to 28) and/or the contact surfaces (50, 52) being preferably arranged on the sides of a square as viewed in the longitudinal direction,
the spacers (40) being preferably configured as radial ribs which are preferably located in a plane extending at right angles to the longitudinal axis (L),
the first pairs and/or the at least one further double pair having own spacers (40) which are preferably arranged in the planes spanned by the axes (A) of the associated supply channels (14 to 20 and 22 to 28) which preferably extend at right angles to the longitudinal axis (L).

10. The valve housing blank according to any of the preceding claims, **characterized in that** the at least one open supply channel (16, 22) ends at its outer end with a cross-sectional widening (60).

11. The valve housing blank according to any of the preceding claims, **characterized in that** the receiving space (12) ends in an end-face wall which is a destructible partition wall (32), an axial supply channel (34) ending on the opposed side thereof.

12. The valve housing blank according to any of the preceding claims, **characterized in that** the receiving space (12) ends outwards in a planar flange face (54) and **in that** a parallel flange face (56) is located on the opposite side of the blank, the flange faces (54, 56), the end faces (42 to 48) and the contact surfaces (50, 52) being located in the surfaces of a cube or cuboid, in particular of a cuboid having a square base.

13. The valve housing blank according to any of the preceding claims, **characterized in that** the partition wall (30, 32) directly adjoins the receiving space (12).

14. The valve housing blank according to any of the preceding claims, **characterized in that** a valve seat manufactured by casting is formed in the receiving space (12).

15. A valve kit having a plurality of adjoining valve housings composed of valve housing blanks according to any of the preceding claims, a plurality of partition walls (30, 32) being at least partly removed so as to form continuous channels and to bring a plurality of supply channels (14 to 28) in fluid communication with each other.

## Revendications

1. Ébauche de boîtier de soupape, comportant un espace de logement (12) pour un insert de soupape (80) qui présente un axe longitudinal (L), au moins deux premières paires de canaux d'amenée (14 à 20) qui sont opposées l'une à l'autre par rapport à l'axe longitudinal (L) et qui forment une double paire de canaux d'amenée s'étendant depuis la face extérieure de l'ébauche latéralement, en particulier radialement vers l'espace de logement (12), **caractérisée en ce qu'**il est prévu une double paire additionnelle de canaux d'amenée (22 à 28) qui sont opposées l'une à l'autre par rapport à l'axe longitudinal (L) et s'étendent depuis la face extérieure de l'ébauche latéralement, en particulier radialement vers l'espace de logement (12), les doubles paires de canaux d'amenée (14 à 28) étant axialement agencées les unes sur les autres, les premières paires de canaux d'amenée (14 à 20) et également les canaux d'amenée (22 à 28) de ladite au moins une double paire additionnelle de canaux d'amenée (22 à 28), vus dans le sens de l'axe longitudinal (L), étant agencés décalés les unes par rapport aux autres, et un seul des canaux d'amenée (16, 22) par double paire étant ouvert vers l'espace de logement (12), et les autres canaux d'amenée (14, 18, 20, 24, 26, 28) étant fermés vers l'espace de logement (12) par une paroi intermédiaire (30) destructible.

2. Ébauche de boîtier de soupape selon la revendication 1, **caractérisée en ce que** les deux premières paires de canaux d'amenée (14 à 20), par rapport à leur axe (A), sont agencées dans un plan qui s'étend de préférence à angles droits par rapport à l'axe longitudinal (L).

3. Ébauche de boîtier de soupape selon l'une des revendications précédentes, **caractérisée en ce que** la double paire additionnelle de canaux d'amenée (22 à 28), par rapport à son axe (A), est également agencée dans un plan qui s'étend de préférence à angles droits par rapport à l'axe longitudinal (L).

4. Ébauche de boîtier de soupape selon l'une des revendications précédentes, **caractérisée en ce que** les deux premières paires de canaux d'amenée (14 à 20) ou ladite au moins une double paire additionnelle de canaux d'amenée (22 à 28) présentent des canaux d'amenée (14 et 22, 18 et 26, 16 et 24, 20 et 28) qui sont agencés axialement les uns sur les autres.

5. Ébauche de boîtier de soupape selon l'une des revendications précédentes, **caractérisée en ce que** le canal d'amenée ouvert (16) des premières paires, par rapport à l'axe longitudinal (L), est agencé du côté diamétralement opposé, mais décalé axialement par rapport au canal d'amenée ouvert (22) de la double paire additionnelle.

6. Ébauche de boîtier de soupape selon l'une des revendications précédentes, **caractérisée en ce que** les canaux d'amenée (14 à 28) sont réalisés sous forme de prolongements tubulaires.

7. Ébauche de boîtier de soupape selon la revendication 6, **caractérisée en ce que** des prolongements agencés axialement les uns sur les autres sont reliés les uns aux autres par une nervure (36) qui est moulée d'un seul tenant et qui s'étend de préférence radialement à l'axe longitudinal (L),
un évidement de fixation (38) étant de préférence réalisé, en particulier coulé dans les nervures (36).

8. Ébauche de boîtier de soupape selon l'une des revendications précédentes, **caractérisée en ce que** les paires de canaux d'amenée associées (14 et 16, 18 et 20, 22 et 24, 26 et 28) sont agencées perpendiculairement les unes par rapport aux autres.

9. Ébauche de boîtier de soupape selon l'une des revendications précédentes, **caractérisée en ce que** des écarteurs (40) faisant saillie latéralement vers l'extérieur sont moulés d'un seul tenant à côté des canaux d'amenée (14 à 28) et s'étendent de préférence jusqu'aux extrémités radialement extérieures des canaux d'amenée (14 à 28),
les canaux d'amenée (14 à 28) se terminant de préférence vers l'extérieur dans une face frontale plane (42 à 48), et les écarteurs (40) se terminant dans le plan des faces frontales (42 à 48) pour y former une surface de contact (50, 52),
de préférence un écarteur, de préférence chaque écarteur (40) s'étendant jusque dans deux plans définis par des faces frontales (42 à 48) et se terminant là en formant chacun une surface de contact (50, 52),
les faces frontales (42 à 48) des canaux d'amenée (14 à 28) et/ou les surfaces de contact (50, 52), vues dans le sens longitudinal, se trouvant de préférence sur les côtés d'un carré,
les écarteurs (40) étant de préférence réalisés sous forme de nervures radiales qui sont de préférence agencées dans un plan s'étendant à angles droits par rapport à l'axe longitudinal (L),
les premières paires et/ou ladite au moins une double paire additionnelle présentant de préférence leur propres écarteurs (40) qui sont de préférence agencés dans les plans engendrés par les axes (A) des canaux d'amenée associés (14 à 20 et 22 à 28) qui s'étendent de préférence à angles droits par rapport à l'axe longitudinal (L).

10. Ébauche de boîtier de soupape selon l'une des revendications précédentes, **caractérisée en ce que** ledit au moins un canal d'amenée ouvert (16, 22) se termine à son extrémité extérieure avec un élargissement de section transversale (60).

11. Ébauche de boîtier de soupape selon l'une des revendications précédentes, **caractérisée en ce que** l'espace de logement (12) se termine dans une paroi côté face frontale qui est une paroi intermédiaire destructible (32) du côté opposé de laquelle se termine un canal d'amenée axial (34).

12. Ébauche de boîtier de soupape selon l'une des revendications précédentes, **caractérisée en ce que** l'espace de logement (12) se termine vers l'extérieur dans une surface de bride plane (54) et **en ce qu'**une surface de bride (56) parallèle se trouve du côté opposé de l'ébauche, les surfaces de bride (54, 56), les faces frontales (42 à 48) et les surfaces de contact (50, 52) se trouvant dans les faces d'un cube ou d'un parallélépipède, en particulier d'un parallélépipède à surface de base carrée.

13. Ébauche de boîtier de soupape selon l'une des revendications précédentes, **caractérisée en ce que** la paroi intermédiaire (30, 32) est directement adjacente à l'espace de logement (12).

14. Ébauche de boîtier de soupape selon l'une des revendications précédentes, **caractérisée en ce qu'**un siège de soupape fabriqué par coulage est réalisé dans l'espace de logement (12)

15. Kit de soupape comportant plusieurs boîtiers de soupape adjacents composés d'ébauches de boîtier de soupape selon l'une des revendications précédentes, plusieurs parois intermédiaires (30, 32) étant au moins partiellement retirées pour former des canaux continus et pour amener plusieurs canaux d'amenée (14 à 28) en communication fluidique les uns avec les autres.
